# EUROPEAN PATENT SPECIFICATION

(11) **EP 2 166 429 B1**
(45) Date of publication and mention of the grant of the patent: **03.07.2019**
(21) Application number: 08164633.3
(22) Date of filing: 18.09.2008
(51) Int. Cl.: G06F 1/20

(54) **Electronic device and heat dissipation unit thereof**
Elektronische Vorrichtung und dazugehörige Wärmeableitungseinheit
Dispositif électronique et son unité de dissipation thermique

(43) Date of publication of application: 24.03.2010
(73) Proprietor: Giga-Byte Technology Co., Ltd., New Taipei City 231 (TW)
(72) Inventor: Chang, Shih-Ho, 231, TAIPEI HSIEN (TW)
(74) Representative: Cabinet Plasseraud

(56) References cited:
- US-A1- 2006 139 880
- US-A1- 2008 212 285
- US-A1- 2008 218 963

## Description

### BACKGROUND OF THE INVENTION

### Field of the Invention

The present invention relates to an electronic device, and in particular, to an electronic device comprising additional heat dissipation ability.

### Description of the Related Art

In conventional electronic devices, heat dissipation systems are provided to dissipate heat produced by the heat sources within the electronic devices. The heat dissipation system utilizes a heatsink to abut a heat source directly, thus transmitting heat from the heat source to the heatsink. Next, air convection is conducted within the electronic device by using a system fan, exhausting heat accumulated in the heatsink.

However, with continued technological development, significant heat is generated by electronic devices, due to increased performance, thus, decreasing efficiency of the conventional heat dissipation system. In other words, new electronic devices must be assembled with more powerful heat dissipation mechanisms, to efficiently dissipate heat. An example of a heat dissipation system known in the prior art is disclosed by US 2008/212285 A1.

### BRIEF SUMMARY OF THE INVENTION

Accordingly, an electronic device is provided as defined in the appended independent claim. Further aspects of the invention are defined in the appended dependent claims.

### BRIEF DESCRIPTION OF THE DRAWINGS

The present invention can be more fully understood by reading the subsequent detailed description and examples with references made to the accompanying drawings, wherein:
Fig. 1 is a schematic view of an electronic device of the invention;
Fig. 2 is a schematic view of a heat dissipation unit of the invention;
Fig. 3 is a schematic view of the electronic device from another perspective, before application of the heat dissipation unit; and
Fig. 4 is a schematic view of the electronic device from another perspective, after application of the heat dissipation unit.

### DETAILED DESCRIPTION OF THE INVENTION

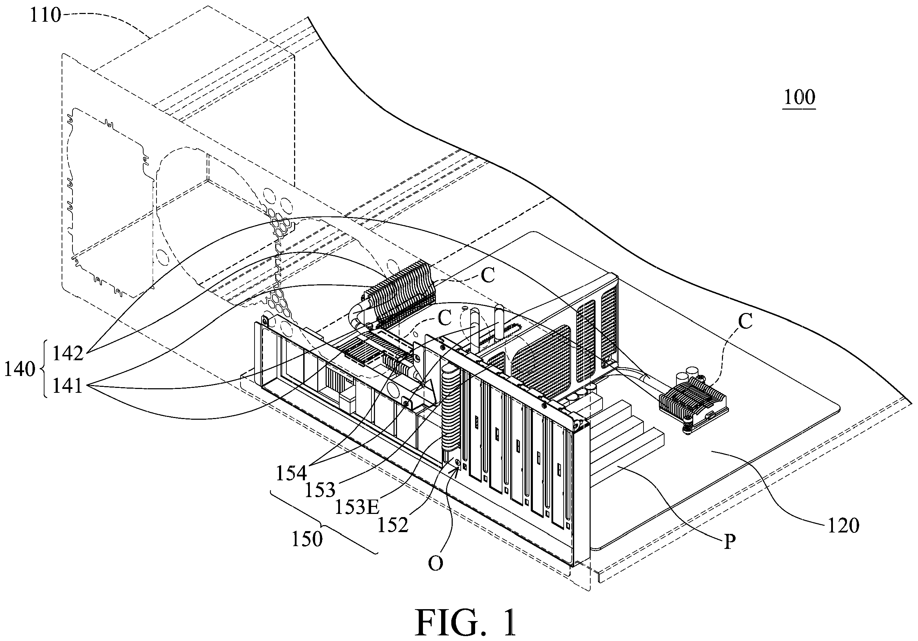

Referring to Fig. 1, the electronic device 100 comprises a housing 110, a circuit board 120, a heat dissipation system 140, a heat dissipation unit 150 and a plurality of heat sources C. In particular, the heat dissipation unit 150 is a supporting heat dissipation mechanism to enhance the heat dissipation efficiency of the overall system.

The circuit board 120 is disposed in the housing 110. The plurality of heat sources C are distributed on the circuit board 120. Through application of the heat dissipation system 140, heat generated by the heat sources C is therefore dissipated. The heat dissipation system 140 comprises a plurality of heatsinks 141 and a plurality of first heat pipes 140. The number of heatsinks 141 is selected according to the number of heat sources C. In the embodiment, the electronic device 100 comprises four heat sources C four heatsinks 141, but it is not limited thereto.

The heatsinks 141 abut the heat sources C, respectively, such that heat from the heat sources C is able to transmit to the heatsinks 141. Additionally, every heatsink 141 is interconnected by one or two first heat pipes 142, allowing every heatsink 141 to achieve an average temperature. As a result, none of the heat sources C would be burned due to overheating. Next, a system fan is utilized for air convection within the housing 100, and further exhaust heat.

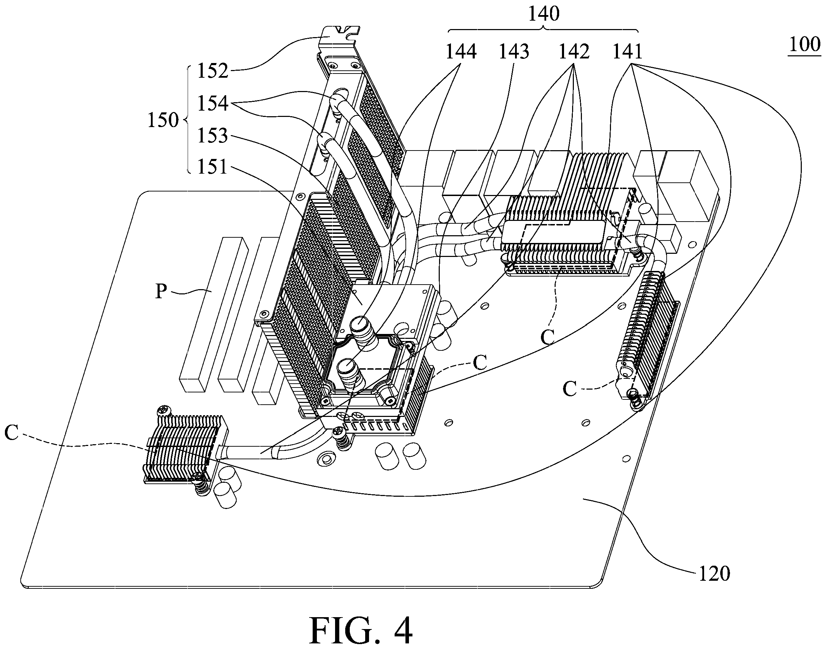

In addition to generating air convection to dissipate heat, the heat dissipation system 140 further comprises a water block 144 and a water-cooling system (not shown), as shown in Fig. 4. The water block 144 is disposed on any of the heatsinks 141. The water-cooling system is disposed outside of the housing 110, communicated with the water block 144. The heat accumulated in the heatsinks 141 is able to be transmitted to the water-cooling system through the circulating cooling fluid, and then dissipated.

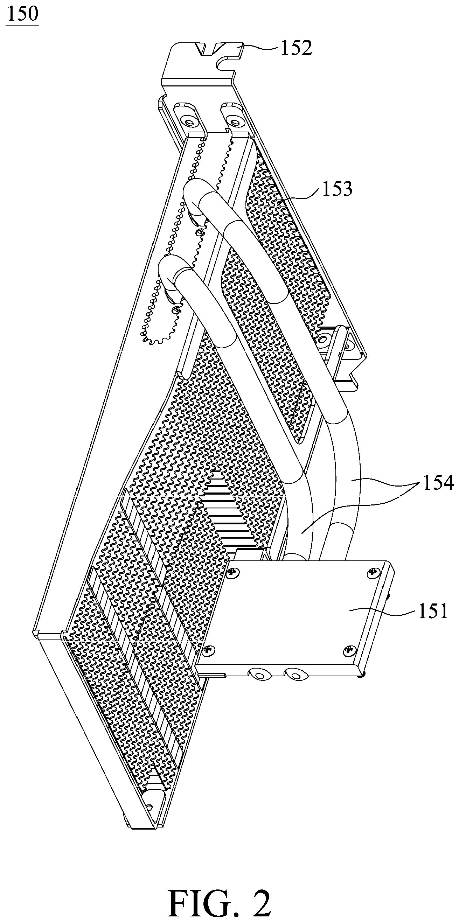

Referring to Figs. 1 and 2, the housing 110 has an aperture O. The heat dissipation unit 150, disposed in the housing 110, is adjacent to a PCI-E slot P, and a portion of the heat dissipation unit 150 is exposed outside of the housing 110. The heat dissipation unit 150 comprises a connecting portion 151, a fastening portion 152, a heat exchanger and two second heat pipes 154.

The connecting portion 151 connects with the heat dissipation system 140. The second heat pipes 154 function to connect the connecting portion 151 and the heat exchanger. The fastening portion 152 is fixed on the periphery of the aperture O of the housing 110. The heat exchanger connects with the fastening portion 152, such that the heat exchanger is also fixed on the housing 110 by the fastening portion 152, and is therefore mounted in the housing 110. Additionally, the heat exchanger comprises a plurality of stacked fins 153, and each of the fins 153 comprises an end portion 153E (as shown in Fig. 1). When the heat exchanger is fixed on the housing 110 by the fastening portion 152, the end portion 153E of each fin 153 is exposed outside of the housing 110.

It should be noted that in the embodiment the heat dissipation unit 150 is disposed in the spare space adjacent to the PCI-E slot P, utilizing the empty space around the PCI-E slot P. Therefore, heat dissipation efficiency is significantly enhanced without increasing the overall volume of the electronic device 100. However, the embodiment is not limited thereto. The heat dissipation unit 150 can be disposed at any position within the housing 110, and only the alteration of the length of the second heat pips 154 is required to connect the connecting portion 151 with the heat dissipation system 140.

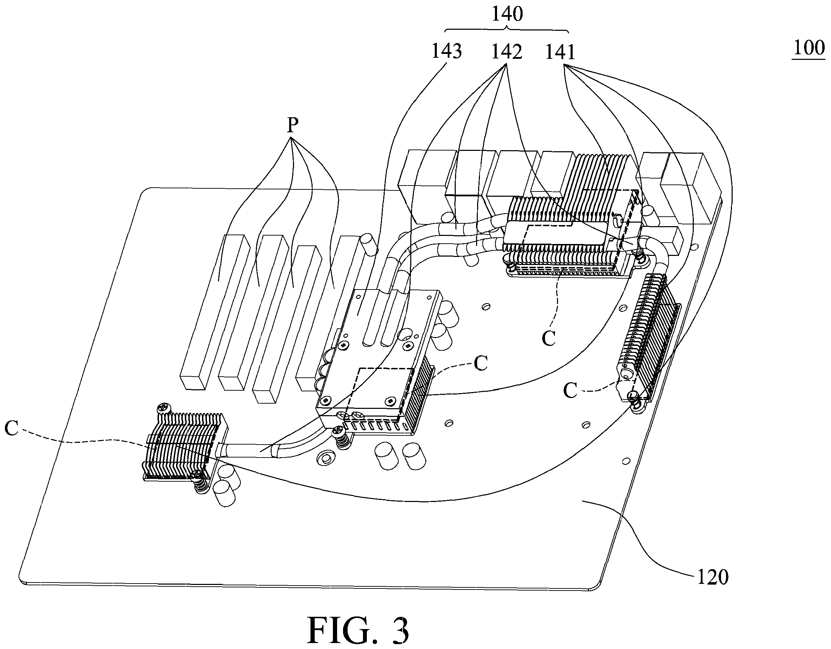

As shown in Figs. 3 and 4, the housing 110 is excluded to clearly show the interior of the electronic device 100. Fig. 3 depicts the electronic device 100 before application of the heat dissipation unit 150, and Fig. 4 depicts the electronic device 100 after application of the heat dissipation unit 150.

Referring to Fig. 3, the heat dissipation system 140 further comprises a corresponding connecting portion 143 for connecting the heat dissipation unit 150 with the heat dissipation system 140. The corresponding connecting portion 143 is disposed on any of the heatsinks 141 to abut the connecting portion 151 of the heat dissipation unit 150. The corresponding connecting portion 143 comprises two grooves to accommodate the two second heat pipes 154.

It should be noted that in the embodiment the corresponding portion 143 is disposed on one of the heatsinks 141, but it is not limited thereto. The corresponding connecting portion 143 can also be disposed on the first heat pipe 142, as long as the conduction of heat from the heat dissipation system 140 to the heat dissipation unit 150 is successfully achieved.

Referring to Fig. 4, when the connecting portion 151 is assembled to the corresponding connecting portion 143, the second heat pipes 154 are clamped therebetween. Thus, heat accumulated in the heat dissipation system 140 is transmitted to the heat exchanger through the connecting portion 151 and the second heat pipes 154, and is then exhausted to the exterior through the exposed end portions 153E of the fins 153, increasing overall heat dissipation efficiency.

For the electronic device 100 of the invention, in addition to heat being dissipated through the heat dissipation system 140, heat is also dissipated through the heat dissipation unit 150 connected to the heat dissipation system 140 to speed up heat dissipation efficiency. Because a portion of the heat dissipation unit 150 is exposed outside of the housing 110, directly exposed to the atmosphere, heat accumulated within the heat dissipation system 140 is efficiently transmitted to the exterior of the housing 110. Moreover, the heat dissipation unit 150 is disposed in the unused space within the housing 110, such that reconfiguration of the components within the housing 110 is not required, and the overall size of the electronic device 100 can be retained.

While the present invention has been described by way of example and in terms of preferred embodiment, it is to be understood that the present invention is not limited thereto. To the contrary, it is intended to cover various modifications and similar arrangements (as would be apparent to those skilled in the art).

## Claims

1. An electronic device, comprising
a housing (110);
a circuit board (120) disposed in the housing;
a heat source (C) disposed on the circuit board;
a heat dissipation system (140) abutting the heat source; and
a heat dissipation unit (150) disposed on the housing and abutting the heat dissipation system, comprising:
a connecting portion (151) abutting the heat dissipation system;
a heat exchanger connected to the connecting portion and comprising a plurality of fins (153) wherein a portion of the fins of the heat dissipation unit is extended from interior of the housing to exterior of the housing exposed outside of the housing and a portion of the fins is inside the housing.

2. The electronic device as claimed in claim 1, wherein the amount of the heat sources (C) is plural, and the heat dissipation system (140) comprises a plurality of heat_sinks (141) abutting the heat sources, respectively.

3. The electronic device as claimed in claim 2, wherein the heat dissipation system (140) comprises a plurality of first heat pipes (142) connecting with the heat sinks, respectively.

4. The electronic device as claimed in claim 1, wherein the heat dissipation unit (150) comprises: a fastening portion (152) fixed on the housing (110) connecting to the heat exchanger; a second heat pipe (154) connecting the connecting portion (151) with the heat exchanger.

5. The electronic device as claimed in claim 4, wherein the housing (110) has an aperture (O), and end portions (153E) of the fins are exposed outside of the housing through the aperture.

6. The electronic device as claimed in claim 1, wherein the housing (110) comprises an aperture (O), and the portion of the heat dissipation unit (150) is exposed outside of the housing via the aperture.

7. The electronic device as claimed in claim 1, wherein the heat dissipation system (140) comprises a corresponding connecting portion (143) abutting the connecting portion of the heat dissipation unit (150).

8. The electronic device as claimed in claim 1, further comprising a PCI-E slot (P) disposed on the circuit board (120), wherein the heat dissipation unit (150) is disposed adjacent to the PCI-E slot.

9. The electronic device as claimed in claim 1, further comprising a pipe connecting the connecting portion (151) with the heat exchanger.

10. The electronic device as claimed in claim 9, wherein ends of the fins (153E) are exposed outside of the housing (110).

11. The electronic device as claimed in claim 9, further comprising a fastening portion (§52) fixed on the housing (110) and connecting to the heat exchanger.

## Patentansprüche

1. Elektronische Vorrichtung, die aufweist:
ein Gehäuse (110);
eine Leiterplatte (120), die im Gehäuse angeordnet ist;
eine Wärmequelle (C), die auf der Leiterplatte angeordnet ist;
ein Wärmeableitungssystem (140), das an der Wärmequelle anliegt; und
eine Wärmeableitungseinheit (150), die am Gehäuse angeordnet ist und am Wärmeableitungssystem anliegt, die aufweist:
einen Verbindungsabschnitt (151), der am Wärmeableitungssystem anliegt;
einen Wärmetauscher, der mit dem Verbindungsabschnitt verbunden ist und mehrere Rippen (153) aufweist, wobei sich ein Abschnitt der Rippen der Wärmeableitungseinheit aus dem Inneren des Gehäuses zum Äußeren des Gehäuses erstreckt und außerhalb des Gehäuses freiliegt und sich ein Abschnitt der Rippen innerhalb des Gehäuses befindet.

2. Elektronische Vorrichtung nach Anspruch 1, wobei die Menge der Wärmequellen (C) eine Mehrzahl ist, und das Wärmeableitungssystem (140) mehrere Kühlkörper (141) aufweist, die jeweils an den Wärmequellen anliegen.

3. Elektronische Vorrichtung nach Anspruch 2, wobei das Wärmeableitungssystem (140) mehrere erste Wärmeleitrohre (142) aufweist, die jeweils mit den Kühlkörpern verbunden sind.

4. Elektronische Vorrichtung nach Anspruch 1, wobei die Wärmeableitungseinheit (150) aufweist:
einen Befestigungsabschnitt (152), der am Gehäuse (110) befestigt ist und mit dem Wärmetauscher verbunden ist;
ein zweites Wärmeleitrohr (154), das den Verbindungsabschnitt (151) mit dem Wärmetauscher verbindet.

5. Elektronische Vorrichtung nach Anspruch 4, wobei das Gehäuse (110) eine Öffnung (O) aufweist, und Endabschnitte (153E) der Rippen durch die Öffnung außerhalb des Gehäuses freiliegen.

6. Elektronische Vorrichtung nach Anspruch 1, wobei das Gehäuse (110) eine Öffnung (O) aufweist, und der Abschnitt der Wärmeableitungseinheit (150) durch die Öffnung außerhalb des Gehäuses freigelegt ist.

7. Elektronische Vorrichtung nach Anspruch 1, wobei das Wärmeableitungssystem (140) einen entsprechenden Verbindungsabschnitt (143) aufweist, der an dem Verbindungsabschnitt der Wärmeableitungseinheit (150) anliegt.

8. Elektronische Vorrichtung nach Anspruch 1, die ferner ein PCI-E-Steckplatz (P) aufweist, der auf der Leiterplatte (120) angeordnet ist, wobei die Wärmeableitungseinheit (150) benachbart zum PCI-E-Steckplatz angeordnet ist.

9. Elektronische Vorrichtung nach Anspruch 1, die ferner ein Rohr aufweist, das den Verbindungsabschnitt (151) mit dem Wärmetauscher verbindet.

10. Elektronische Vorrichtung nach Anspruch 9, wobei Enden der Rippen (153E) außerhalb des Gehäuses freiliegen (110).

11. Elektronische Vorrichtung nach Anspruch 9, die ferner einen Befestigungsabschnitt (152) aufweist, der am Gehäuse (110) befestigt ist und mit dem Wärmetauscher verbunden ist.

## Revendications

1. Dispositif électronique, comprenant :
un boîtier (110) ;
une carte de circuits (120) disposée dans le boîtier ;
une source de chaleur (C) disposée sur la carte de circuits ;
un système de dissipation thermique (140) venant en butée contre la source de chaleur ; et
une unité de dissipation thermique (150) disposée sur le boîtier et venant en butée contre le système de dissipation thermique, comprenant :
une portion de raccordement (151) venant en butée contre le système de dissipation thermique ;
un échangeur thermique raccordé à la portion de raccordement et comprenant une pluralité d'ailettes (153),
dans lequel une portion des ailettes de l'unité de dissipation thermique est étendue depuis un intérieur du boîtier jusqu'à un extérieur du boîtier exposé à l'extérieur du boîtier et une portion des ailettes est à l'intérieur du boîtier.

2. Dispositif électronique selon la revendication 1, dans lequel la quantité des sources de chaleur (C) est supérieure à un, et le système de dissipation thermique (140) comprend une pluralité de dissipateurs thermiques (141) venant respectivement en butée contre les sources de chaleur.

3. Dispositif électronique selon la revendication 2, dans lequel le système de dissipation thermique (140) comprend une pluralité de premiers tuyaux de chaleur (142) se raccordant respectivement aux dissipateurs thermiques.

4. Dispositif électronique selon la revendication 1, dans lequel l'unité de dissipation thermique (150) comprend :
une portion d'attachement (152) fixée sur le boîtier (110) se raccordant à l'échangeur thermique ;
un deuxième tuyau de chaleur (154) raccordant la portion de raccordement (151) à l'échangeur thermique.

5. Dispositif électronique selon la revendication 4, dans lequel le boîtier (110) comporte une ouverture (O), et des portions d'extrémité (153E) des ailettes sont exposées à l'extérieur du boîtier à travers l'ouverture.

6. Dispositif électronique selon la revendication 1, dans lequel le boîtier (110) comprend une ouverture (O), et la portion de l'unité de dissipation thermique (150) est exposée à l'extérieur du boîtier par l'intermédiaire de l'ouverture.

7. Dispositif électronique selon la revendication 1, dans lequel le système de dissipation thermique (140) comprend une portion de raccordement correspondante (143) venant en butée contre la portion de raccordement de l'unité de dissipation thermique (150).

8. Dispositif électronique selon la revendication 1, comprenant en outre une fente PCI-E (P) disposée sur la carte de circuit (120), dans lequel l'unité de dissipation thermique (150) est disposée adjacente à la fente PCI-E.

9. Dispositif électronique selon la revendication 1, comprenant en outre un tuyau raccordant la portion de raccordement (151) à l'échangeur thermique.

10. Dispositif électronique selon la revendication 9, dans lequel des extrémités des ailettes (153E) sont exposées à l'extérieur du boîtier (110).

11. Dispositif électronique selon la revendication 9, comprenant en outre une portion d'attachement (152) fixée sur le boîtier (110) et se raccordant à l'échangeur thermique.
